Europäisches Patentamt

(19) **European Patent Office**

Office européen des brevets

(11) Publication number: **0 105 822**
**B1**

(12) **EUROPEAN PATENT SPECIFICATION**

(45) Date of publication of patent specification: **29.06.88**

(51) Int. Cl.⁴: **B 60 C 1/00, B 60 C 11/18**

(21) Application number: **83630092.1**

(22) Date of filing: **20.05.83**

(54) **Tread.**

(30) Priority: **09.06.82 US 386543**

(43) Date of publication of application:
**18.04.84 Bulletin 84/16**

(45) Publication of the grant of the patent:
**29.06.88 Bulletin 88/26**

(84) Designated Contracting States:
**DE FR GB IT LU**

(56) References cited:
**DE-A-1 901 448**
**DE-A-1 917 427**
**FR-A-2 394 407**
**US-A-3 907 019**

(73) Proprietor: **THE GOODYEAR TIRE & RUBBER COMPANY**
**1144 East Market Street**
**Akron, Ohio 44316-0001 (US)**

(72) Inventor: **Becker, Harold David**
**770 Westridge Road**
**Akron Ohio 44313 (US)**

(74) Representative: **Weyland, Joseph Jean Pierre**
**Goodyear Technical Center Luxembourg Patent Department Avenue Gordon Smith**
**L-7750 Colmar-Berg (LU)**

Courier Press, Leamington Spa, England.

## Description

This invention relates to a tire comprising a tread composed of a plurality of layers. DE—A—19 01 448 (corresponding with the preamble of claim 1), for example, describes such a tire with a tread composed of three layers. The intermediate layer consists of a compound which provides a high braking coefficient when the tire is partially worn.

Other more conventional methods of constructing tires consist of applying and vulcanizing a tread of uniform composition to a tire carcass. Physical properties of the tread compound are dictated by, among other things, the tire load anticipated and the roughness of the terrain in which the tire is used. In many instances, two or more requirements of a tread compound may be inconsistent with each other and thus the tread compound must be a compromise between the competing requirements.

The shortcomings of these prior art tread compositions are especially noticeable in large tires wherein, due to the thickness of the tire, heat tends to build up and is not dissipated from the central portion of the tire, that is the bottom portion of the tread area as well as the belt area. Additionally, the outer tread surface of such a tire in many instances is subjected to abrasion and cutting actions as when utilized in mining operations and the like.

It is the object of the present invention to provide a tire having inner tread layers of improved heat resistance and outer layers of improved tear resistance. This object is achieved by the means recited in the characterization clause of appended claim 1.

For a complete understanding of the objects, techniques, and structure of the invention, reference should be had to the following detailed description and accompanying drawings wherein:

Fig. 1 is a cross-sectional view of a tire having a three layer tread; and

Fig. 2 is a partial cross-sectional view of a tire having a six layer tread.

According to the present invention, a tread is provided which has a plurality of layers with the different layers having different physical properties. In general, the outer tread layers will have a high abrasion resistance, cutting resistance and the like including good wear rates whereas the inner layers will have good heat resistance.

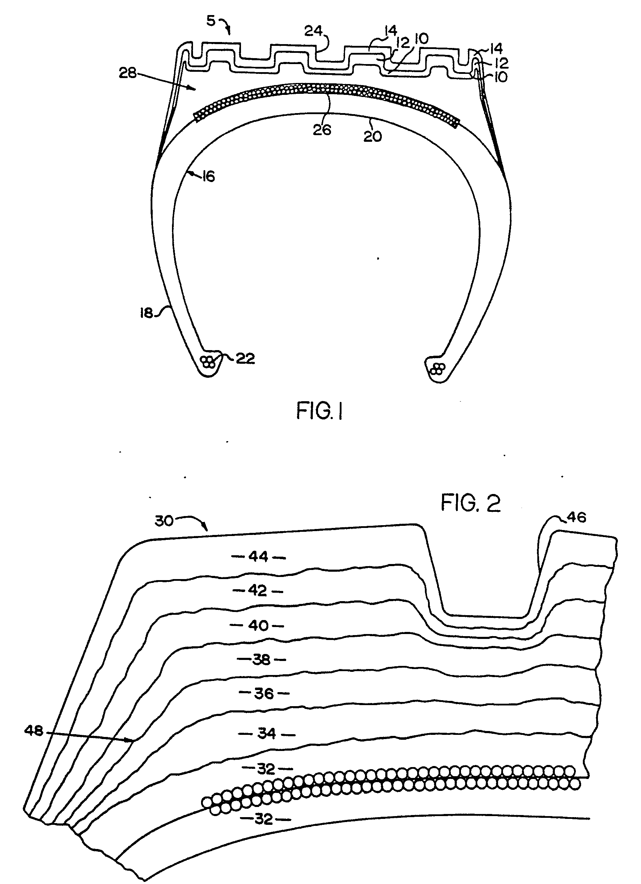

Referring to Fig. 1, a cross-section of a tire having three tread layers is designated by the number 5. Tread layers 10, 12 and 14 are positioned radially outward from a crown portion 20 of a tire caracass 16. Belts 26 may be interposed between layer 10 and crown 20 by suitable means. Carcass 16 also contains sidewalls 18 and circumferential beads 22 of rigid material on either side.

Non-skid tread layer 14 contains tread grooves 24. It can be seen that the tread layers follow tread grooves 24 such that layers 10 and 12 are thinner at the groove locations. Thus, when layer 14 has been worn away, the tire 5 may still contain some tread groove and thus still be serviceable.

Layer 14 has extremely good tear and wear resistance properties and relatively poor heat resistance properties. Because a lesser amount of heat is built up on the outer surface of the tread, the lack of heat resistance properties is not detrimental to tire life or to tread 14.

On the other hand, a great deal of heat build-up occurs in the shoulder areas 28 and, to a lesser extent in the area immediately above the crown 20 of the carcass 16. It is in the shoulder area 28 where a great deal of flexing occurs. Heat is generated by hysteretic action and is dissipated very slowly due to the low surface to volume ratio in the shoulder area. Because layer 10 is not in contact with the ground, there is no . need to have a high degree of tear, cut and/or wear resistance in this layer, and thus this layer can be optimized for heat resistance. Between layers 10 and 14, layer 12 may be compounded to contain an intermediate amount of heat resistance and tear resistance as it is eventually exposed somewhat to the ground and thus to abrasive rock and particles which may cause tearing. Layer 12 must also resist heat build-up, although to a lesser extent than layer 10.

In Fig. 2, a cross-section of a portion of a six layer tread is designated by the number 30. Layer 34, having good heat resistance properties, is positioned immediately above carcass 32. Above layer 34 are placed sequentially layers 36, 38, 40 and 42 having progressively less heat resistance and progressively more wear, cut and tear resistance. Layer 44 has the greatest amount of wear, cut and tear resistance and relatively poor heat resistance.

As in the three layered embodiment of Fig. 1, a tread groove 46 has several tread layers compressed beneath it. At shoulder area 48, the greatest amount of heat build-up occurs due to flexing of the tread during normal use. Thus, this area has high heat resistance. Heat resistance is measured by rebound, which is an indication of expected heat dissipation efficiency.

There are numerous, well-known and conventional tread compounds yielding good wear, tear and cut resistance which can be utilized in the present invention. Similarly, the same holds true for a tread layer having good heat resistance.

Examples of ingredients which give good wear, tear and cut resistance in a tread compound include natural rubber (cis-1,4-polyisoprene), hydrated amorphous silica and equivalents thereof, carbon blacks having either high, intermediate, or low surface areas, common or conventional synthetic rubbers such as styrene-butadiene rubber, synthetic cis-1,4-polyisoprene, and medium vinyl polybutadiene, that is, polybutadiene having a vinyl content of between 30 and 50%. In other words, rubber made from dienes having from 4 to 10 carbon atoms, copolymers made from dienes having from 4 to 10 carbon atoms with vinyl substituted aromatics having from 8 to 12 carbon atoms (e.g., styrene-butadiene rubber), nitrile rubber, and the like. Examples of suitable synthetic rubbers are set forth in *The Vanderbilt Rubber Handbook,* Winspear, R. T. Vanderbilt Co., 1968, which is hereby fully incorporated by reference. Tread compounds can also be formulated having incorporated therein shredded wire to increase cut resistance.

Tread compounds having good heat resistance generally have a large amount of natural rubber (cis-1,4-polyisoprene) such as Hevea or Guayule, low surface area carbon black, little or no synthetic rubber and little or no amounts of silica or other non-carbon black fillers.

For a three layer tread as in Fig. 1, the wear, cut and tear resistant layer 15 contains between about 0 or 0.1 and 30 PHR of natural cis-1,4-polyisoprene with about between 0 and 10 being preferred; between about 70 and 100 PHR of styrene-butadiene rubber with between about 90 and 100 being preferred; between about 40 and 80 PHR of a high surface area carbon black with between about 55 and 65 PHR being preferred; between about 0 and 30 PHR of a hydrated amorphous silica with about 10 and 20 being preferred. Exemplary of carbon blacks having high surface area and suitable for use in layer 14 are those with the following ASTM designations: N-121, N-219, N-220, N-231, N-234 and N-242. These blacks are the ones commonly used in tire construction, but it is to be understood that there are other blacks available which are equally suitable but are not normally used in tire compounds because of availability or cost. Furthermore, it is to be understood that whenever a high, intermediate or low surface area carbon black is utilized, either or both of the remaining types of carbon black can be utilized in amounts such that they produce the same type of result as the specified carbon black. In addition, tread layer 14 may have incorporated therein shredded wire of between about 0, or 0.1 and about 20 PHR, said wire having a diameter of between about 0.004 to about 0.008 inches with a length varying between 1/4 and 1/2 inches. The shredded wire is generally steel and optionally may have a brass or copper coating.

Layer 10 having good heat resistance properties can contain about between 70 and 100 PHR of natural cis-1,4-polyisoprene with about between 95 and 100 being preferred; between about 30 and 0 PHR of styrene-butadiene rubber with between about 10 and 0 PHR being preferred; between about 10 and 50 PHR of a carbon black having a low surface area with between about 30 and 40 PHR being preferred; and between about 0 and 15 PHR of a hydrated amorphous silica with between about 5 and 0 being preferred. Carbon blacks having low surface area include those with ASTM designations N-650 and N-660. As previously noted, intermediate or high surface area carbon blacks can also be used in lieu of the low surface area carbon black but is not preferred.

Layer 12, disposed between layers 10 and 14, has intermediate properties, as stated above. A typical formulation for layer 12 includes between about 30 and 75 PHR of natural cis-1,4-polyisoprene, with between about 50 and 70 being preferred; between about 70 and 25 PHR of styrene-butadiene rubber, with about between 40 and 30 being preferred; between about 25 and 65 PHR of a carbon black having an intermediate surface area with about between 35 and 55 PHR being preferred; and between about 0 and 20 PHR of a hydrated amorphous silica with about between 0 and 10 PHR being preferred. Carbon blacks having intermediate surface area and thus suitable for layer 12 include those with ASTM designations N-326, N-327, N330, N-339 and N-347.

Each of the three layers 10, 12 and 14 also contain various well known antioxidants, processing oil, curatives, antiozonates, and other conventional additives in amounts which are conventional in the art. Specific examples of these ingredients may be found in *The Vanderbilt Rubber Handbook,* Winspear, Geo. editor, R. T. Vanderbilt Co., Inc., 1968.

For the six layer tread of Fig. 2, outer, non-skid layer 44 might have the same tread recipe as layer 14 of Fig. 1, thus also high in wear, cut and tear resistance and relatively poor in heat resistance. Further, layer 34 having good heat resistance might have a compounding recipe similar to layer 10 of the tire in Fig. 1. Middle layers 36, 38, 40 and 42 contain tread compounds which have properties intermediate between the innermost and outermost layers 32 and 44 respectively. Generally, the tire compounder has greater flexibility as the number of tread layers is increased. The tread compounds can become more specialized and thus have a narrower range of amounts of ingredients. Thus for example, the outer non-skid layer 44 of the six layer tread might have narrower ranges than the outer layer of the three layer tread. Specifically, the amount of natural rubber of cis-1,4-polyisoprene is present in the outer layer in the range of between about 0 and 5 PHR with about between 0 and 3 PHR being preferred. Styrene-butadiene may range in the amount between about 100 and 95 PHR with between about 100 and 97 being preferred. Carbon black having a high surface area is present in amounts between about 50 and 80 PHR with between about 55 and 65 PHR being preferred. Hydrated amorphous silica is present in amounts between about 0 and 30 PHR with between about 10 and 20 PHR being preferred. Carbon blacks having high surface area and thus suitable for incorporation in the outer layer 44 include those listed above, vis., ASTM designations N-121, N-219, N-220, N-231, N-234 and N-242.

The innermost, heat resistant layer 34 contains between about 95 and 100 PHR of natural cis-1,4-polyisoprene with between about 98 and 100 PHR being preferred; between about 5 and 0 PHR of styrene-butadiene rubber with between about 3 and 9 PHR being preferred; between about 20 and 40 PHR of a low surface area carbon black with between about 25 and 35 PHR being preferred; and between about 0 and 15 PHR of a hydrated amorphous silica with between about 0 and 5 PHR being preferred. Suitable low surface area carbon blacks include ASTM designations N-650 and N-660.

Layer 36 has between about 80 and 95 PHR of a natural cis-1,4-polyisoprene with about between 88 and 92 PHR being preferred; between about 20 and 5 PHR of styrene-butadiene rubber with about between 15 and 8 PHR being preferred; between about 25 and 45 PHR of a low surface area carbon black with about between 37 and 43 PHR being preferred; and about between 0 and 15 PHR of a hydrated amorphous silica with about between 3 and 7 PHR being preferred.

Layer 38 contains about between 60 and 80 PHR of a natural cis-1,4-polyisoprene with about between 73 and 78 PHR being preferred; about between 40 and 20 PHR of styrene-butadiene rubber with about between 30 and 27 PHR being preferred; between about 30 and 50 PHR of an intermediate surface area carbon black with about between 35 and 45 PHR being preferred; between about 0 and 20 PHR of a hydrated amorphous silica with about 3 and 8 PHR being preferred.

Layer 40 would contain about between 40 and 60 PHR of a natural cis-1,4-polyisoprene with about between 48 and 53 PHR being preferred; about between 60 and 40 PHR of styrene-butadiene rubber with about between 48 and 53 PHR being preferred, about between 35 and 55 PHR of an intermediate surface area carbon black with about between 43 and 48 PHR being preferred and about between 0 and 20 PHR of a hydrated amorphous silica with about between 7 and 13 PHR being preferred. The intermediate surface area carbon blacks of layers 38 and 40 include those having ASTM designations N-326, N-327, N-330, N-339 and N-347.

Finally, layer 42 positioned just beneath layer 44 would have about between 5 and 40 PHR of a natural cis-1,4-polyisoprene with about between 7 and 13 PHR being preferred; about between 95 and 60 PHR of styrene-butadiene rubber with about between 93 and 87 PHR being preferred, about between 45 and 65 PHR of a high surface area carbon black with about between 48 and 53 PHR being preferred; about between 0 and 30 PHR of a hydrated amorphous silica with about between 13 and 18 PHR being preferred.

As in the three layer tread 5 of Fig. 1, the six layer tread 30 contains conventional amounts of antioxidants, processing oil and curatives as well as other additives well known to the art. In addition, any of layers 34 through 44 may contain shredded wire of between 0 and 20 PHR having dimensions similar to those described hereinabove.

While the foregoing describes compositions of the various tread layers of the invention, it will be appreciated that such disclosure is given to enable those skilled in the art to make tread layers merely representative of those having the desired physical properties. Other compound recipes may be used to make tread layers having the same physical properties. Accordingly, reference should be made to Table II and Table III which summarize the physical properties of a three layered and a six layered tread respectively.

A conventional laminating process used for manufacturing earth moving tires and other large tires lends itself nicely to the use of a plurality of tread layers as described herein. In the laminating process the rubber compound is broken down either on a mill or on a cold feed extruder, then calendered to a sheet and wrapped on the tire carcass to the desired thickness and profile. The wrapping is carried out at between about 150° to about 190°F. The laminating process can also be adapted to smaller tires such as tractor tires, passenger tires and the like. Rubber compounds are fed to the extruder in the order in which they are applied to the tire carcass. Thus, for a six layered tread, the compound of layer 34 is first fed to the extruder, followed by layers 36, 38, 40, 42 and 44. Some blending occurs where the heels of the adjacent compounds mix in the extruder.

The invention will be better understood by reference to the following example. The following example illustrates the preferred embodiment in which a six layered tread is applied to an earth moving tire.

Example I

The compounds set forth in Table I were charged to an extruder feeding a laminating machine. Compound F was charged first followed sequentially by compounds E, D, C, B, and A. These combinations of rubbers, carbon blacks, etc., are combined with conventional compounding ingredients including sulfur zinc oxide, stearic acid, and the like. The laminator calendered the rubber giving a layer of rubber .080—.090 inches thick which was continuously wrapped on the tire carcass mounted on a conventional drum. Each layer was 1/2 to 1-1/2 inches thick. The tire was then cured in a conventional manner.

TABLE I

| | Outer layer high wear, tear & cut resistance | | | | | Inner layer best heat resistance |
| | A | B | C | D | E | F |
|---|---|---|---|---|---|---|
| Natural rubber | 0 | 10 | 50 | 75 | 90 | 100 |
| SBR | 100 | 90 | 50 | 25 | 10 | 0 |
| Carbon black Iodine #115[a] | 60 | 59 | | | | |
| Iodine #85[b] | | | 45 | 40 | | |
| Iodine #35[c] | | | | | 40 | 30 |
| Hydrated amorphous silica[o] | 15 | 15 | 10 | 5 | 5 | 0 |
| Antioxidant[1] | 2 | 2 | 2 | 2 | 2 | 2 |
| Processing oil[2] | 25 | 25 | 10 | 10 | 10 | 10 |
| Accelerator[3] | 2 | 2 | 2 | 2 | 2 | 2 |
| 300% modulus | 9.1 | 9.8 | 10.4 | 11.4 | 11.4 | 11.6 |
| Tensile[4] | 17.7 | 18.4 | 19.2 | 20.0 | 22.2 | 24.0 |
| Elongation (%) | 500 | 510 | 525 | 550 | 555 | 555 |
| Tear N/IN | 1290 | 1280 | 1260 | 1249 | 940 | 890 |
| Rebound (%)[5] | 69 | 71 | 73 | 75 | 80 | 89 |
| Pico abrasion[6] | 103 | 98 | 96 | 94 | 82 | 80 |

[a] High surface area.
[b] Intermediate surface area.
[c] Low surface area.
[o] Hi-Sil 215 manufactured by Pittsburgh Plate Glass.

[1] Diamine type.
[2] Aromatic type.
[3] Morpholine disulfide type.
[4] Meganewtons per square meter.
[5] Measured by ASTM 1054.
[6] Measured by ASTM D 2228.

### TABLE II

Phyiscal properties three layer tread

| Tread layer | Range | Tear[1] | Rebound[2] | Pica abrasion[3] |
|---|---|---|---|---|
| Inner | General | 830—1050 | 82—96 | 70—90 |
| | Desired | 850—930 | 85—93 | 75—85 |
| | Preferred | 870—910 | 87—91 | 78—82 |
| Middle | General | 1050—1290 | 69—82 | 84—104 |
| | Desired | 1210—1270 | 71—79 | 89—99 |
| | Preferred | 1230—1250 | 73—77 | 92—96 |
| Outer | General | 1230—1350 | 64—74 | 96—110 |
| | Desired | 1250—1330 | 66—72 | 98—108 |
| | Preferred | 1270—1310 | 68—70 | 101—105 |

[1] Measured in Newtons/inch on Instron
[2] ASTM D1054 (%)
[3] ASTM D2228 units.

### TABLE III

Physical properties six layer tread

| Tread layer | Range | Tear[1] | Rebound[2] | Pico abrasion[3] |
|---|---|---|---|---|
| Inner | General | 830—1060 | 82—96 | 70—90 |
| | Desired | 850—930 | 85—93 | 75—85 |
| | Preferred | 870—910 | 87—91 | 78—82 |
| 2nd inner | General | 1060—1200 | 75—85 | 74—94 |
| | Desired | 1200—1280 | 77—83 | 77—87 |
| | Preferred | 1220—1260 | 79—81 | 80—84 |
| 3rd inner | General | 1190—1290 | 69—81 | 84—104 |
| | Desired | 1210—1270 | 71—79 | 89—99 |
| | Preferred | 1230—1250 | 73—77 | 92—96 |
| 4th inner | General | 1200—1330 | 67—79 | 88—108 |
| | Desired | 1230—1300 | 69—77 | 91—101 |
| | Preferred | 1250—1270 | 71—75 | 94—98 |
| 5th inner | General | 1230—1330 | 65—76 | 92—110 |
| | Desired | 1250—1310 | 67—74 | 94—102 |
| | Preferred | 1270—1290 | 69—72 | 96—100 |
| 6th inner | General | 1230—1350 | 64—74 | 96—112 |
| | Desired | 1250—1330 | 66—72 | 98—108 |
| | Preferred | 1270—1310 | 68—70 | 101—105 |

[1] Measured in Newtons/inch on Instron
[2] ASTM D1054 (%)
[3] ASTM D2228 units

In general, the number of tread layers can vary from 3 to about 10, more commonly from 3 to 7 layers, and preferably from 3 to 6. Tread layer thickness depends to a large extent on the type of tire being manufactured and the number of layers desired. Generally the thickness may vary between about 1/4 and 6 inches, desirably between 1 inch and 4 inches. For earth moving tires, about 1-1/2 inches per tread layer is preferred.

**Claims**

1. Tire comprising a tread composed of at least three layers (10, 12, 14; 32, 34, 36, 38, 40, 42, 44) each of said tread layers containing one or more ingredients selected from the group consisting of natural cis 1,4 polyisoprene, carbon black and synthetic rubber, whereby the outermost layer (44) has an abrasion resistance which is higher than the abrasion resistance of the other layers, characterized in that said tread is composed of at the most 10 layers wherein its innermost layer (10; 32) has a rebound value of from 82 to 96 percent according to ASTM 1054 and a Pico abrasion value of from 70 to 90 according to ASTM D 2228, its outermost layer (14; 44) has a rebound value of from 64 to 74 percent according to ASTM 1054 and a Pico abrasion value of from 96 to 112 according to ASTM D2228 and its intermediate layer (12), respectively layers (34, 36, 38, 40, 42), have rebound and abrasion value(s) intermediate to the values of said innermost and outermost layers in graduated increments therebetween, and that said tread layers are between 6,35 mm (1/4 inches) and 152,4 mm (6 inches) in thickness.

2. The tire of claim 1 wherein the tread is composed of 3 layers, characterized in that its middle intermediate layer (12) has a rebound value of from 69 to 82 percent and a Pico abrasion value of from 84 to 104.

3. Tire according to claim 1 or 2 characterized in that the innermost layer (10; 32) contains 95 to 100 phr natural cis 1,4 polyisoprene, up to 5 phr synthetic rubber, 20 to 40 phr low surface area carbon black and up to 15 phr hydrated amorphous silica, said outermost layer (14; 44) contains up to 5 phr natural cis 1,4 polyisoprene, 100 to 95 phr synthetic rubber, 50—70 phr high surface area carbon black and up to 30 phr hydrated amorphous silica and said intermediate layer (12), respectively layers (34, 36, 38, 40, 42), contain(s) amounts of said components intermediate to the amounts thereof contained in said innermost and outermost layers in graduated increments therebetween, wherein the majority of said intermediate layers contain an intermediate surface area carbon black.

**Patentansprüche**

1. Reifen mit einer Lauffläche, die aus wenigstens drei Lagen (10, 12, 14; 32, 34, 36, 38, 40, 42, 44) zusammengesetzt ist, wobei jede der drei Lagen ein oder mehrere Bestandteile aufweist ausgewählt aus der Gruppe, die natürliches Cis-1,4-Polyisopren, Ruß und Synthesekautschuk enthält, wobei die am meisten außenliegende Lage (44) einen Abriebwiderstand aufweist, welcher höher ist als der Abriebwiderstand der anderen Lagen, dadurch gekennzeichnet, daß die Lauffläche aus höchstens zehn Lagen zusammengesetzt ist, wobei die am weitesten innen liegende Lage (10; 32) einen Rückprallwert von 82% bis 96% gemäß ASTM 1054 und einen Pico-Abriebwert von 70 bis 90 gemäß ASTM D 2228 aufweist, daß die am weitesten außen liegende Lage (14; 44) einen Rückprallwert von 64% bis 74% gemäß ASTM 1054 und einen Pico-Abriebwert von 96 bis 112 gemäß ASTM D 2228 aufweist, daß die dazwischen liegende Lage (12) bzw. die dazwischen liegenden Lagen (34, 36, 38, 40, 42) Rückprall- und Abriebwerte aufweisen; die mit abgestufter Zunahme zwischen den Werten der am weitesten innen liegenden und der am weitesten außen liegenden Lagen liegen, und daß die Laufflächenlagen zwischen 6,35 mm (1/4 Zoll) und 152,4 mm (6 Zoll) dick sind.

2. Reifen nach Anspruch 1, wobei die Lauffläche aus drei Lagen Zusammengesetzt ist, dadurch gekennzeichnet, daß die mittlere, dazwischen liegende Lage (12) einen Rückprallwert von 69% bis 82% und einen Pico-Abriebswert von 84 bis 104 aufweist.

3. Reifen nach Anspruch 1 oder 2, dadurch gekennzeichnet, daß die am weitesten innen liegende Lage (10, 32) 95 bis 100 phr (Massenteile eines Additivs pro 100 Teile Harz) natürliches Cis-1,4-Polyisopren, bis zu 5 phr Synthesekautschuk, 20 bis 40 phr Ruß mit geringer Oberfläche und bis zu 15 phr hydratisiertes amorphes Siliciumdioxid aufweist, daß die am weitesten außen liegende Lage (14; 44) bis zu 5 phr natürliches Cis-1,4-Polyisopren, 100 bis 95 phr Synthesekautschuk, 50 bis 70 phr Ruß mit großer Oberfläche und bis zu 30 phr hydratisiertes amorphes Siliciumdioxid aufweist, und daß die dazwischen liegende Lage (12) bzw. die dazwischen liegenden Lagen (34, 36, 38, 40, 42) Mengen der Komponenten in abgestufter Zunahme zwischen den Mengen aufweisen, die in der am weitesten innen liegenden Lage und der am weitesten außen liegenden Lage enthalten sind, wobei die Mehrzahl der dazwischen liegenden Lagen einen Ruß mit dazwischen liegender Oberfläche aufweist.

**Revendications**

1. Bandage pneumatique comprenant une bande de roulement constituée d'au moins trois couches (10, 12, 14; 32, 34, 36, 38, 40, 42, 44), chacune de ces couches de bande de roulement contenant un ou plusieurs ingrédients choisis parmi le groupe comprenant le cis-1,4-polyisoprène naturel, le noir de carbone et le caoutchouc synthétique, de telle sorte que la couche extérieure extrême (44) ait une résistance à l'abrasion supérieure à celle des autres couches, caractérisé en ce que cette bande de roulement est constituée, au maximum, de 10 couches parmi lesquelles la couche intérieure extrême (10; 32) a une valeur de rebond de 82 à 96% conformément à la norme ASTM 1054 et une valeur d'abrasion selon Pico de 70 à 90 conformément à la norme ASTM D 2228, la couche extérieure extrême (14; 44) a une valeur de rebond de 64 à 74% conformément à la norme ASTM 1054 et une valeur d'abrasion selon Pico de 96 à 112 conformément à la norme ASTM D2228, tandis que la couche intermédiaire (12), respectivement, les couches (34, 36, 38, 40, 42), ont des valeurs de rebond et d'abrasion se situant entre celles des couches

**0 105 822**

intérieure extrême et extérieure extrême en incréments échelonnés entre elles, ces couches de bande de roulement ayant une épaisseur de situant entre 6,35 mm (1/4 pouce) et 152,4 mm (6 pouces).

2. Bandage pneumatique selon la revendication 1, dans lequel la bande de roulement est constituée de trois couches, caractérisé en ce que la couche centrale intermédiaire (12) a une valeur de rebond de 69 à 82% et une valeur d'abrasion selon Pico de 84 à 104.

3. Bandage pneumatique selon la revendication 1 ou 2, caractérisé en ce que la couche intérieure extrême (10; 32) contient 95 à 100 parties (par 100 parties de caoutchouc) de cis-1,4-polyisoprène naturel, jusqu'à 5 parties (par 100 parties de caoutchouc) de caoutchouc synthétique, 20 à 40 parties (par 100 parties de caoutchouc) d'un noir de carbone à faible surface spécifique et jusqu'à 15 parties (par 100 parties de caoutchouc) de silice amorphe hydratée, la couche extérieure extrême (14; 44) contient jusqu'à 5 parties (par 100 parties de caoutchouc) de cis-1,4-polyisoprène naturel, 100 à 95 parties (par 100 parties de caoutchouc) de caoutchouc synthétique, 50—70 parties (par 100 parties de caoutchouc) d'un noir de carbone à haute surface spécifique et jusqu'à 30 parties (par 100 parties de caoutchouc) de silice amorphe hydratée, tandis que la couche intermédiaire (12), respectivement les couches (34, 36, 38, 40, 42), contient (contiennent) les composants précités dans des quantités se situant entre celles contenues dans les couches intérieure extrême et extérieure extrême, en incréments échelonnés entre elles, la majeure partie de ces couches intermédiaires contenant un noir de carbone à surface spécifique intermédiaire.

FIG. 1

FIG. 2